# EUROPEAN PATENT SPECIFICATION

(11) **EP 0 693 550 B1**
(45) Date of publication and mention of the grant of the patent: **16.06.2004**
(21) Application number: 95810462.2
(22) Date of filing: 12.07.1995
(51) Int. Cl.: C11D 3/39, C07F 13/00, C07D 213/74, C07D 257/10, C07D 255/04, C07D 487/18, C07D 255/02, C07D 487/22

(54) **Fabric bleaching composition**
Bleichmittelzusammensetzung für Gewebe
Composition de blanchiment de tissu

(30) Priority: 21.07.1994 GB 9414690; 15.12.1994 GB 9425322
(43) Date of publication of application: 24.01.1996
(73) Proprietor: Ciba Specialty Chemicals Holding Inc., 4057 Basel (CH)
(72) Inventor: Bacher, Jean-Pierre, F-68220 Buschwiller (FR); Eckhardt, Claude, Dr., F-68400 Riedisheim (FR); Reinehr, Dieter, Dr., D-79400 Kandern (DE)

(56) References cited:
- EP-A- 0 392 592
- EP-A- 0 630 964
- WO-A-91/14694
- US-A- 4 655 785
- M. R. BERMEJO ET AL.: "A mechanism for the rearrangement of unsymmetrical tetradentate (N2O2) ligands bound to manganese(III): the isolation and crystal structure of a manganese(III) complex containing a ten-membered cis-chelated ring" JOURNAL OF THE CHEMICAL SOCIETY, DALTON TRANSACTIONS, no. 8, 1994, pages 1265-1269, XP002077467 Letchworth GB
- CHEMICAL ABSTRACTS, vol. 81, no. 12, 23 September 1974 Columbus, Ohio, US; abstract no. 72056t, ZELENTSOV ET AL.: "Synthesis and magnetic properties of manganese(III)coordination compounds with azomethine derivatives of o-hydroxyaldehydes" page 607; column r; XP002077468 & ZH. OBSHCH. KHIM. (MOSCOW, USSR), vol. 44, no. 6, 1974, pages 1309-1313,
- EMB-1992351253 (Embase Database)

## Description

The present invention relates to fabric bleaching compositions comprising a peroxygen compound and, as bleach activator, a manganese complex.

Bleaching compositions which contain a peroxide bleaching agent are well known. In such compositions, the bleaching agent functions to remove common domestic stains such as tea, coffee, fruit and wine stains from the soiled clothing at the boil. If the washing temperature is reduced to below 60°C., however, the efficacy of the bleaching agent is correspondingly reduced.

It is also well known that certain heavy metal ions, or complexes thereof, function to catalyse the decomposition of hydrogen peroxide, or of compounds which can liberate hydrogen peroxide, in order to render the peroxide compound effective at temperatures below 60°C.

For example, in US-A-5 114 611, there is described the activation of a peroxy compound by a complex of a transition metal (Mn, Co, Fe or Cu) with a non-(macro) cyclic ligand, preferably 2,2-bispyridylamine or 2,2-bispyridylmethane.

Moreover, in US-A-5 114 606, there is described a manganese complex, for use as a bleach catalyst for a peroxy compound, which is a water-soluble complex of manganese II, III or IV, or mixtures thereof, with a ligand which is a non-carboxylate polyhydroxy compound, having at least three consecutive C-OH groups in its molecular structure, preferably sorbitol.

Other disclosures, relating to the use of metal complexes as activators for peroxy compounds in bleaches or detergents, include US-A-5 227 084, US-A-5 194 416, US-A-4 728 455, US-A-4 478 733, US-A-4 430 243, EP-A-549 271, EP-A-549 272, EP-A-544 519, EP-A-544 490, EP-A-544 440, EP-A-509 787, EP-A-458 397 and EP-A-458 398.

Patent document EP-A-0 630 964 discloses a process for inhibiting the re-adsorption of migrating dyes in the wash liquor, comprising contacting a fabric with a composition comprising :
a) a peroxy compound; and
b) one or more water-soluble salen-type manganese complexes.

Patent document WO91/146 discloses salen-type manganese complexes as chiral catalysts and epoxidation reactions catalysed thereby Embase document EMB-1992351253 discloses salen-type manganese complexes for sulfoxidation reactions with hydrogen peroxide as oxidant.

It has now been found, surprisingly, that certain other manganese complexes are excellent bleach catalysts for peroxy compounds and, relative to known bleach catalysts, provide enhanced bleach effects at low wash temperatures (e.g. at 15 to 40°C.) and/or using shorter washing times.

Accordingly, the present invention provides a fabric bleaching composition comprising
a) a peroxy compound; and
b) 0.0005 to 0.5, preferably 0.005 to 0.05%, by weight of manganese, of one or more water-soluble manganese complexes having one of the formulae (5), (6), (7) (8): 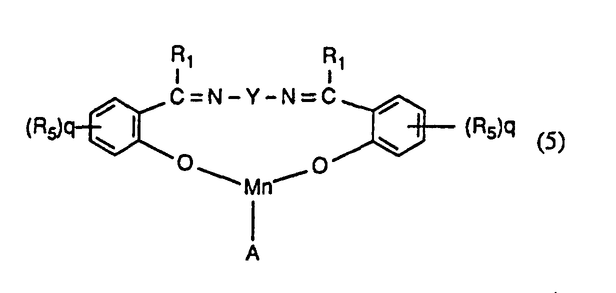 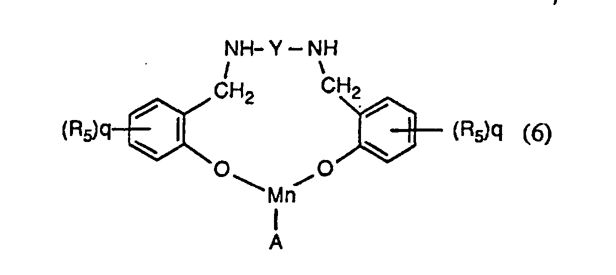 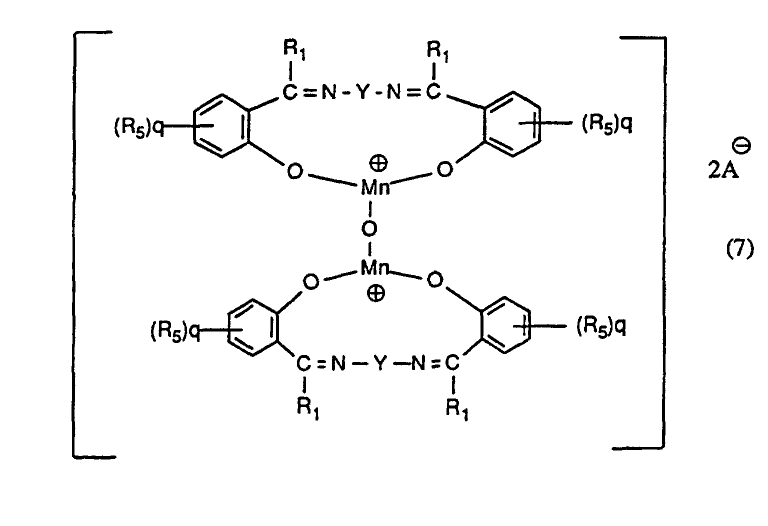 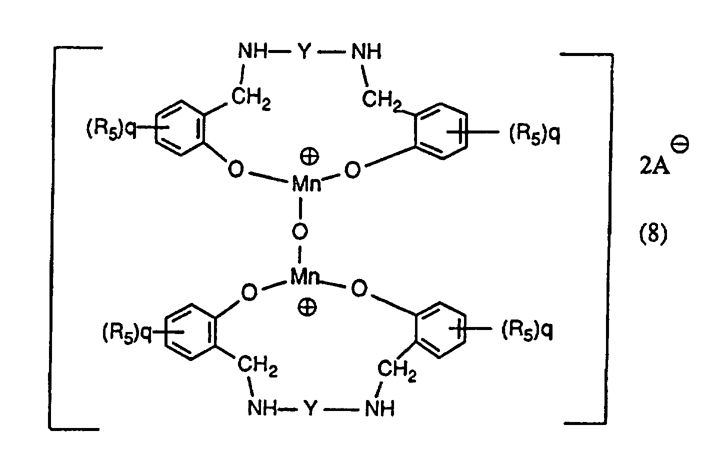
in which R₁ is hydrogen or optionally substituted alkyl, cycloalkyl or aryl; R₅ is hydrogen, optionally substituted alkyl, optionally substituted alkoxy, halogen, cyano, N(optionally substituted alkyl)₂, N^{⊕}(optionally substituted alkyl)₃ or a water-solubilising group, especially SO₃M;
Y is optionally substituted alkylene or cyclohexylene; q is 0, 1, 2 or 3; and A is an anion.

When R₁, R₅ are optionally substituted alkyl, those alkyl groups are C₁-C₁₂-, especially C₁-C₄-alkyl groups. The alkyl groups may be branched or unbranched and may be optionally substituted, e.g. by halogen such as fluorine, chlorine or bromine, by C₁-C₄-alkoxy such as methoxy or ethoxy, by phenyl or carboxyl, by C₁-C₄-alkoxycarbonyl such as acetyl, or by a mono- or di-C₁-C₄alkylated amino group.

Optionally substituted alkoxy groups R₅ are preferably C₁-C₈, especially C₁-C₄-alkoxy groups. The alkoxy groups may be branched or unbranched and may be optionally substituted, e.g. by halogen such as fluorine, chlorine or bromine, by C₁-C₄-alkoxy such as methoxy or ethoxy, by phenyl or carboxyl, by C₁-C₄-alkoxycarbonyl such as acetyl, or by a mono- or di-alkylated amino group.

Halogen atoms R₅ are preferably bromo or, especially, chloro atoms.

N(optionally substituted alkyl)₂ groups R₅ are preferably N(optionally substituted C₁-C₄alkyl)₂ groups, especially N(methyl)₂ or N(ethyl)₂.

N^{⊕}(optionally substituted alkyl)₃ groups R₅ are N^{⊕}(optionally substituted C₁-C₄alkyl)₃, especially N^{⊕}(methyl)₃ or N^{⊕}(ethyl)₃.

When R₁ is cycloalkyl, this may also be substituted, e.g. by C₁-C₄-alkyl or C₁-C₄-alkoxy.

When R₁ is optionally substituted aryl, this is preferably a phenyl or naphthyl group which may be substituted by C₁-C₄-alkyl, e.g. by methyl, ethyl, propyl, isopropyl, butyl, isobutyl, sec.-butyl or tert.-butyl, by C₁-C₄-alkoxy such as methoxy, ethoxy, propoxy, isopropoxy, butoxy, isobutoxy, sec.-butoxy or tert.-butoxy, by halogen such as fluorine, chlorine or bromine, by C₂-C₅-alkanoylamino, such as acetylamino, propionylamino or butyrylamino, by nitro, sulpho or by dialkylated amino.

When Y is alkylene, it is preferably a C₂-C₄-alkylene residue, especially a -CH₂-CH₂-bridge. Y may also be a C₂-C₈-alkylene residue which is interrupted by oxygen or, especially, by nitrogen, in particular the -(CH₂)₃-NH-(CH₂)₃-, -(CH₂)₂-NH-(CH₂)₂ or -(CH₂)₂-N(CH₃)-(CH₂)₂- bridge.

Anions A include halide, especially chloride, chlorate, sulphate, nitrate, hydroxy, methoxy, BF₄, PF₆, carboxylate, especially acetate, triflate or tosylate.

As to the compounds of formula (5), (6), (7) and (8), preferably R₁ is hydrogen or methyl, q is 1, R₅ is hydrogen, methyl or SO₃Na and is preferably in p-position with respect to the oxygen atom, Y is -CH₂CH₂- or cyclohexylene and A is a chloride, chlorate, acetate, hydroxy, methoxy or PF₆ anion.

In each of the compounds of formula (5) to (8) it is preferred that they are used in neutral form, i.e. that M, when present, is other than hydrogen, preferably a cation formed from an alkali metal, in particular sodium, or from an amine.

The manganese complexes of formula (5) in which q is 2, 3 or 4 and those of formula (6), (7), (8) are believed to be new compounds and, as such, form a further aspect of the present invention. The compounds of formula (5) are described, at least in part in WO 93/03838. The compounds of formula (5), (6) may be produced by known methods, e.g. by the methods analogous to those disclosed in US Patent 4,655,785 relating to similar copper complexes. The compounds of formula (7) and (8) may be produced by oxidative coupling of the respective compound of formula (5) or (6).

The peroxy component a) of the fabric bleaching compositions of the present invention may be hydrogen peroxide, a compound which liberates hydrogen peroxide, a peroxyacid, a peroxyacid bleach precursor or a mixture thereof.

Compounds which liberate hydrogen peroxide are well known and include, e.g., inorganic compounds such as alkali metal peroxides, -perborates, -percarbonates, -perphosphates and -persulfates and organic compounds such as peroxylauric acid, peroxybenzoic acid, 1,12-diperoxydodecanoic acid, diperoxyisophthalic acid and urea peroxide, as well as mixtures thereof. Sodium percarbonate and sodium perborate, in particular sodium perborate monohydrate, are preferred.

Peroxyacid compounds and peroxyacid bleach precursors are also well known and a summary of references describing them is provided in the above-mentioned US-A-5 114 606.

Examples of peroxyacid bleach precursors include benz(4H)-1,3-oxazin-4-one derivatives, especially substituted 2-phenyl-benz(4H)-1,3-oxazin-4-one 2-(N,N,N-trimethyl ammonium) ethyl sodium-4-sulfophenyl carbonate chloride (SPCC) N-octyl,N,N-dimethyl-N10-carbophenoxy decyl ammonium chloride (ODC) 3-(N,N,N-trimethyl ammonium) propyl sodium 4-sulfophenyl carboxylate N,N,N-trimethyl ammonium toluyloxy benzene sulfonate sodium-4-benzoyloxy benzene sulfonate (SBOBS) N,N,N',N'-tetraacetyl ethylene diamine (TAED) sodium-1-methyl-2-benzoyloxy benzene-4-sulfonate sodium-4-methyl-3-benzoyloxy benzoate and sodium nonanoyloxybenzene sulfonate (NOBS). The substituted 2-phenyl-benz(4H)-1,3-oxazin-4-one, NOBS and TAED precursors are preferred.

Preferably, the amount of the peroxy compound in the fabric bleaching composition according to the invention ranges from 0.5 to 50%, especially from 2 to 20% by weight, based on the total weight of the composition.

The fabric bleaching compositions of the present invention preferably also comprises a surfactant and a detergent builder component.

The surfactant component is preferably an anionic surfactant, a nonionic surfactant or a mixture thereof and is preferably present in an amount of 5 to 50%, especially 5 to 25% by weight, based on the total weight of the fabric bleaching composition.

The anionic surfactant component may be, e.g., a sulphate, sulphonate or carboxylate surfactant, or a mixture of these.

Preferred sulphates are alkyl sulphates having 12-22 carbon atoms in the alkyl radical, optionally in combination with alkyl ethoxy sulphates having 10-20 carbon atoms in the alkyl radical.

Preferred sulphonates include alkyl benzene sulphonates having 9-15 carbon atoms in the alkyl radical.

In each case, the cation is preferably an alkali metal, especially sodium.

Preferred carboxylates are alkali metal sarcosinates of formula R-CO(R¹)CH₂COOM¹ in which R is alkyl or alkenyl having 9-17 carbon atoms in the alkyl or alkenyl radical, R¹ is C₁-C₄ alkyl and M¹ is alkali metal.

The nonionic surfactant component may be, e.g., a condensate of ethylene oxide with a C₉-C₁₅ primary alcohol having 3-8 moles of ethylene oxide per mole.

The detergent builder component is preferably present in an amount of 5 to 80%, especially 10 to 60% by weight, based on the total weight of the fabric bleaching composition. It may be an alkali metal phosphate, especially a tripolyphosphate; a carbonate or bicarbonate, especially the sodium salts thereof; a silicate; an aluminosilicate; a polycarboxylate; a polycarboxylic acid; an organic phosphonate; or an aminoalkylene poly (alkylene phosphonate); or a mixture of these.

Preferred silicates are crystalline layered sodium silicates of the formula NaHSiₘO₂ₘ₊₁.pH₂O or Na₂SiₘO₂ₘ₊₁.pH₂O in which m is a number from 1.9 to 4 and p is 0 to 20.

Preferred aluminosilicates are the commercially-available synthetic materials designated as Zeolites A, B, X, and HS, or mixtures of these. Zeolite A is preferred.

Preferred polycarboxylates include hydroxypolycarboxylates, in particular citrates, polyacrylates and their copolymers with maleic anhydride.

Preferred polycarboxylic acids include nitrilotriacetic acid and ethylene diamine tetra-acetic acid.

Preferred organic phosphonates or aminoalkylene poly (alkylene phosphonates) are alkali metal ethane 1-hydroxy diphosphonates, nitrilo trimethylene phosphonates, ethylene diamine tetra methylene phosphonates and diethylene triamine penta methylene phosphonates.

The fabric bleaching compositions of the invention may contain, in addition to the components already mentioned, one or more of fluorescent whitening agents, such as a bis-triazinylamino-stilbene-disulphonic acid, a bis-triazolyl-stilbene-disulphonic acid, a bis-styryl-biphenyl, a bis-benzofuranylbiphenyl, a bis-benzoxalyl derivative, a bis-benzimidazolyl derivative, a coumarine derivative or a pyrazoline derivative; soil suspending agents, for example sodium carboxymethylcellulose; salts for adjusting the pH, for example alkali or alkaline earth metal silicates; foam regulators, for example soap; salts for adjusting the spray drying and granulating properties, for example sodium sulphate; perfumes; and also, if appropriate, antistatic and softening agents; such as smectite clays; enzymes, such as proteases, cellulases, lipases, oxidases and amylases; photobleaching agents; pigments; and/or shading agents. These constituents should, of course, be stable to the bleaching system employed.

A particularly preferred fabric bleaching composition co-additive is a polymer known to be useful in preventing the transfer of labile dyes between fabrics during the washing cycle. Preferred examples of such polymers are polyvinyl pyrrolidones, optionally modified by the inclusion of an anionic or cationic substituent, especially those having a molecular weight in the range from 5000 to 60,000, in particular from 10,00 to 50,000. Preferably, such polymer is used in an amount ranging from 0.05 to 5%, preferably 0.2-1.7% by weight, based on the weight of the detergent.

The formulation of the fabric bleaching compositions of the invention may be conducted by any conventional technique.

The fabric bleaching composition may be formulated as a solid; or as a non-aqueous liquid fabric bleaching composition, containing not more than 5, preferably 0-1 wt.% of water, and based on a suspension of a builder in a non-ionic surfactant, as described, e.g., in GB-A-2158454.

Preferably, the fabric bleaching composition is in powder or granulate form.

Such powder or granulate forms may be produced by firstly forming a base powder by spray-drying an aqueous slurry containing all the said components , apart from the components a) and b); then adding the components a) and b) by dry-blending them into the base powder. In a further process, the component b) may be added to an aqueous slurry containing the surfactant and builder components, followed by spray-drying the slurry prior to dry-blending component a) into the mixture. In a still further process, a nonionic component is not present, or is only partly present in an aqueous slurry containing anionic surfactant and builder components; component b) is incorporated into the nonionic surfactant component, which is then added to the spray-dried base powder; and finally component a) is dry-blended into the mixture.

The present invention also comprises a bleaching and/or cleaning process comprising contacting a fabric to be bleached and/or cleaned with an effective amount of a fabric bleaching composition according to the present invention. Preferably the amount of the fabric bleaching composition used is such that the amount of manganese complex b) provides from 0.001 to 100 ppm, preferably from 0.01 to 20 ppm of manganese in the bleaching and/or cleaning bath.

The following Examples serve to illustrate the invention; parts and percentages are by weight, unless otherwise stated.

### Example 1

6g of ethylenediamine are dropped into a solution of 34.5g of 3-isopropylsalicylaldehyde in 500ml of ethanol over 1 hour at 60°C. Stirring is continued at 60°C. for a further 2 hours and the precipitate so formed is filtered off. There are obtained 34.5g of a yellow liquid compound having the formula: 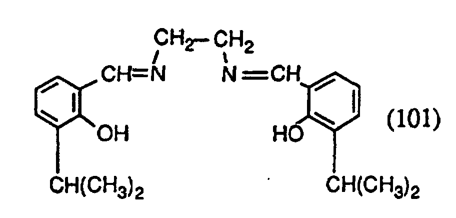 corresponding to a yield of 98% of theory.

To 10.6g of the compound of formula (101) dissolved in 350ml of ethanol there are added 7.4g of manganese-(II)-acetate.4H₂O. The dark brown solution so produced is stirred at 65°C. for 3 hours and then evaporated to dryness. There are obtained 10.5g of the compound having the formula: 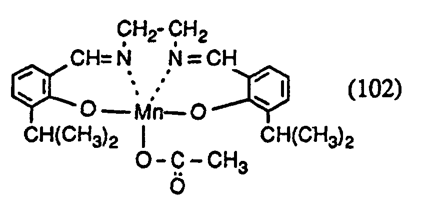 corresponding to a yield of 75% of theory.

| Elemental analysis of the compound having the formula (102) and having the empirical formula C₂₄H₂₉MnN₂O₄. 0.8 3-isopropylsalicylaldehyde gives: | |
|---|---|
| Req.% | C 64.47; H 6.48; N 4.70; Mn 9.23. |
| Found % | C 64.5; H 6.7; N 5.0; Mn 9.46. |

### Example 2

Using the procedure described in Example 1 but with appropriate modification of the salicylaldehyde starting material, the compound of formula: 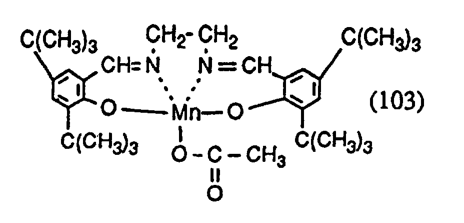 is obtained as a dark brown product in a yield of 91 % of theory.

| Elemental analysis of the compound having the formula (103) and having the empirical formula C₃₄H₄₉MnN₂O₄. 1.0 acetic acid gives: | |
|---|---|
| Req.% | C 65.05; H 7.97; N 4.21; Mn 8.27. |
| Found % | C 64.3; H 8.1; N 4.2; Mn 8.44. |

### Example 3

Using the procedure described in Example 1 but with appropriate modification of the salicylaldehyde starting material and the salt formation step, the compound of formula: 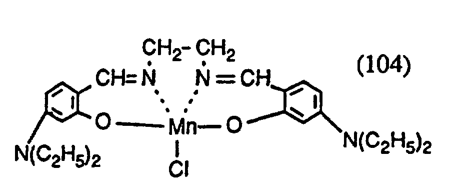 is obtained as a red brown product in a yield of 63% of theory.

| Elemental analysis of the compound having the formula (104) and having the empirical formula C₂₄H₃₂ClMnN₄O₂. 0.75 H₂O gives: | |
|---|---|
| Req.% | C 56.41; H 6.55; N 10.96; Cl 6.94; Mn 10.76. |
| Found % | C 56.5; H 6.6; N 10.9; Cl 6.8; Mn 9.9. |

### Example 4

Using the procedure described in Example 1 but with appropriate modification of the salicylaldehyde starting material, the compound of formula: 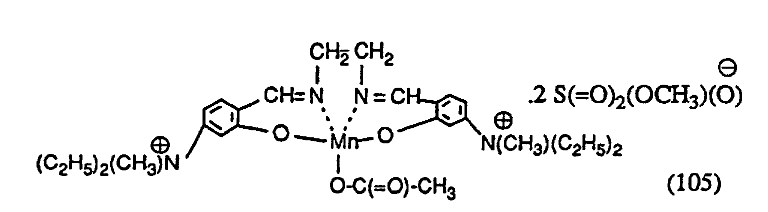 is obtained as a red product in a yield of 61 % of theory.

| Elemental analysis of the compound having the formula (105) and having the empirical formula C₃₀H₄₇MnN₄O₁₂S₂. 2.5 H₂O gives: | | | | | |
|---|---|---|---|---|---|
| Req.% | C 43.90; | H 6.34; | N 6.83; | S 7.80; | Mn 6.70. |
| Found % | C 44.20; | H 6.7; | N 6.6; | S 7.1; | Mn 5.71. |

### Example 5

60g of ethylenediamine are dropped into a solution of 277g of salicylaldehyde in 500ml of ethanol over 1 hour at 60°C. Stirring is continued at 60°C. for a further 2 hours and the precipitate so formed is filtered off. There are obtained 260g of a yellow compound having the formula: 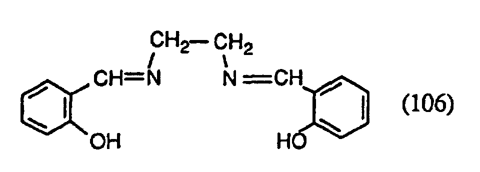 corresponding to a yield of 97% of theory.

16 g. of this compound are dissolved in 500 mls. of ethanol and treated with 11.9 g. of manganese-II-chloride.4H₂O and with 11.9 g. of potassium hexafluorophosphate. The solution is stirred for 20 minutes at 25°C., then cooled to 5°C. and treated with a mixture of 12 mls. of 30% caustic soda solution, 6.8 mls. of a 30% hydrogen peroxide solution and 300 mls. of water. The pH of the solution is adjusted to 8-9 using 2N H₂SO₄ and filtered. After concentration of the filtrate, 8 g. of a brown-violet crystalline product of formula (107) are obtained, corresponding to a yield of 32% of theory:

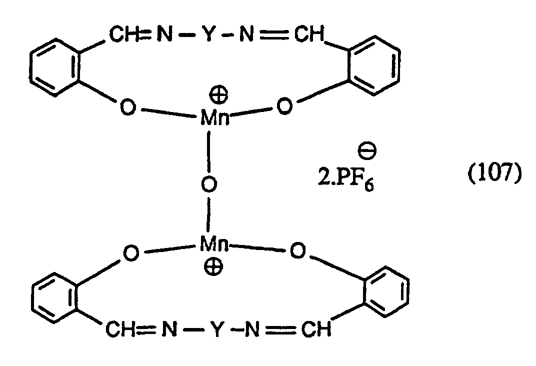

| Elemental analysis of the compound having the formula (107) and having the empirical formula C₃₂H₂₈F₁₂Mn₂N₄O₅P₂ gives: | |
|---|---|
| Req.% | C 40.53; H 2.99; N 5.91; F 24.04; Mn 11.59. |
| Found % | C 40.8; H 3.3; N 6.0; F 22.3; Mn 11.1. |

### Example 6

The compound of formula (106) described in Example 5 is dissolved in tetrahydrofuran solvent and hydrogenated at 25°C. and under normal pressure in the presence of a 5% Pd/C catalyst. The compound of the following formula is obtained in 86% of the theoretical yield:

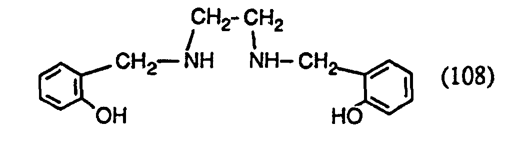

Using the procedure described in Example 1, the compound (108) is converted into the dark brown compound having the following formula in a yield of 12% of the theoretical yield:

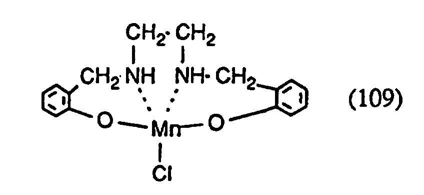

| Elemental analysis of the compound having the formula (109) and having the empirical formula C₁₆H₁₈ClMnN₂O₂.1.5 H₂O. 0.33 compound (108) gives: | |
|---|---|
| Req.% | C 53.53; H 5.16; N 7.81; Cl 7.43; Mn 11.53. |
| Found % | C 53.1; H 5.6; N 7.4; Cl 7.8; Mn 11.7. |

### Example 7

Using the procedure described in Example 1, the following compound of formula (110) is obtained:

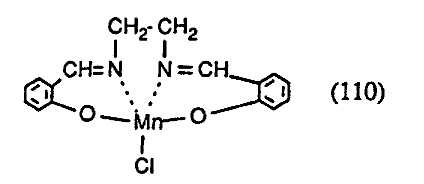

| Elemental analysis of the compound having the formula (110) and having the empirical formula C₁₆H₁₄ClMnN₂O₂. 1.92 H₂O gives: | |
|---|---|
| Req.% | C 49.11; H 4.60; N 7.16; Cl 9.06; Mn 14.04. |
| Found % | C 49.4; H 4.6; N 7.1; Cl 8.9; Mn 13.9. |

### Example 8

To 26.8g of the compound of formula (106), as described in Example 5, dissolved in 450ml of water there are added 24.5 g of manganese-(II)-acetate.4H₂O and 26.2 g of 30% caustic soda solution. The dark brown solution so produced is stirred at 70°C. for 2 hours and then cooled to 5°C. The precipitated dark brown product is filtered off and dried in vacuum. There are obtained 25 g of the compound having the formula (111) (92 % of theory):

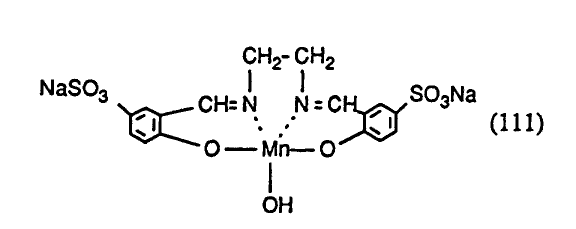

| Elemental analysis of the compound having the formula (111) and having the empirical formula C₁₆H₁₃MnN₂Na₂O₉S₂. 1.0H₂O gives: | |
|---|---|
| Req.% | C 34.2; H 3.03; N 5.0; Mn 9.8. |
| Found % | C 34.2; H 3.3; N 5.6; Mn 9.3. |

### Example 9

Using the procedure described in Example 1, the following compound of formula (112) is prepared:

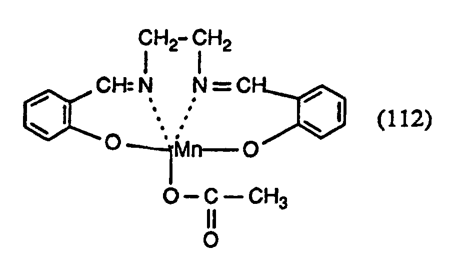

| Elemental analysis of the compound having the formula (112) and having the empirical formula C₁₈H₁₇MnN₂O₄ gives: | |
|---|---|
| Req.% | C 56.8; H 4.5; N 7.4; Mn 14.5. |
| Found % | C 56.7; H 4.6; N 7.3; Mn 14.6. |

### Example 10

Using the procedure described in Example 1, the following compound of formula (113) is prepared:

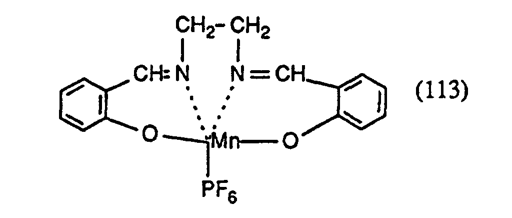

| Elemental analysis of the compound having the formula (113) and having the empirical formula C₁₆H₁₄F₆MnN₂O₂P. 2.12H₂O gives: | |
|---|---|
| Req.% | C 38.1; H 3.6; N 5.6; H₂O 7.6; Mn 10.9. |
| Found % | C 38.5; H 3.5; N 5.7; H₂O 7.6; Mn 11.0. |

### Example 11

Using the procedure described in Example 1, the following compound of formula (114) is prepared:

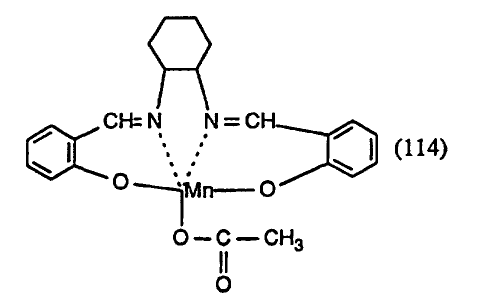

| Elemental analysis of the compound having the formula (114) and having the empirical formula C₂₂H₂₃MnN₂O₄.1.9H₂O gives: | |
|---|---|
| Req.% | C 56.4; H 5.8; N 6.0; H₂O 7.3; Mn 11.7. |
| Found % | C 56.2; H 5.8; N 5.9; H₂O 7.3; Mn 11.5. |

### Example 12

Using the procedure described in Example 1, the following compound of formula (115) is prepared:

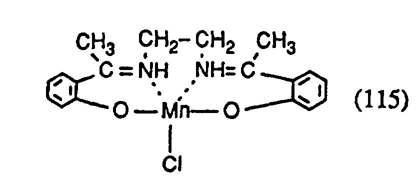

| Elemental analysis of the compound having the formula (115) having the empirical formula C₁₈H₁₈ClMnN₂O₄ gives: | |
|---|---|
| Req.% | C 56.2; H 4.7; N 7.3; Mn 17.3. |
| Found % | C 56.3; H 4.6; N 7.1; Mn 17.1. |

### Example 13

Using the procedure described in Example 1, the following compound of formula (116) is prepared:

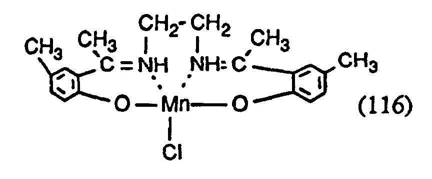

| Elemental analysis of the compound having the formula (116) having the empirical formula C₂₀H₂₂ClMnN₂O₂.4.25 H₂O.0.33 NaCl gives: | |
|---|---|
| Req.% | C 49.1; H 5.8; N 5.72; Cl 9.65; Mn 11.23. |
| Found % | C 49.1; H 5.9; N 5.6; Cl 9.8; Mn 10.8. |

### Example 14

Using the procedure described in Example 1, the following compound of formula (117) is prepared:

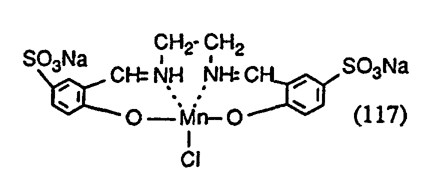

| Elemental analysis of the compound having the formula (117) having the empirical formula C₁₆H₁₂ClMnN₂Na₂O₈S₂. 3H₂O. 1.2NaCl gives: | |
|---|---|
| Req.% | C 28.0; H 2.6; N 4.1; Mn 8.0; S 9.3. |
| Found % | C 28.0; H 2.6; N 4.1; Mn 7.8; S 9.1. |

### Example 15

Using the procedure described in Example 1, the following compound of formula (118) is prepared:

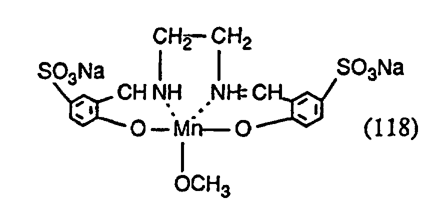

| Elemental analysis of the compound having the formula (118) and having the empirical formula C₁₇H₁₅MnN₂Na₂O₉S₂ gives: | |
|---|---|
| Req.% | C 34.0; H 2.7; N 5.0; Mn 9.9; S 11.5. |
| Found % | C 34.8; H 3.3; N 5.0; Mn 10.1; S 11.2. |

### Example 16

Using the procedure described in Example 1, the following compound of formula (119) is prepared:

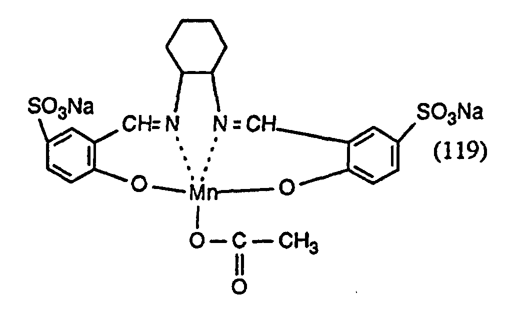

| Elemental analysis of the compound having the formula (119) and having the empirical formula C₂₂H₂₁MnN₂Na₂O₁₀S₂. 1.56H₂O gives: | |
|---|---|
| Req.% | C 39.6; H 3.6; N 4.2; Mn 8.2; S 9.6. |
| Found % | C 39.6; H 4.2; N 4.9; Mn 8.7; S 9.6. |

### Example 17

Using the procedure described in Example 1, the following compound of formula (120) is prepared:

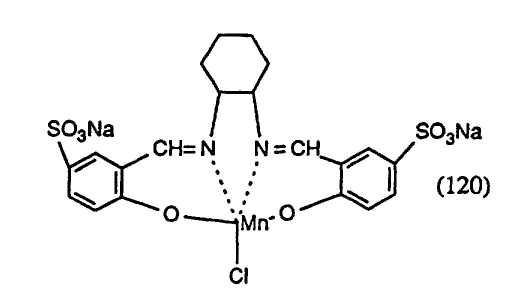

| Elemental analysis of the compound having the formula (120) having the empirical formula C₂₀H₁₈ClMnN₂Na₂O₈S₂. 2.5H₂O. 1.45NaCl gives: | |
|---|---|
| Req.% | C 32.2; H 3.1; N 3.8; Mn 7.4. |
| Found % | C 32.2; H 3.1; N 3.8; Mn 7.2. |

### Example 18

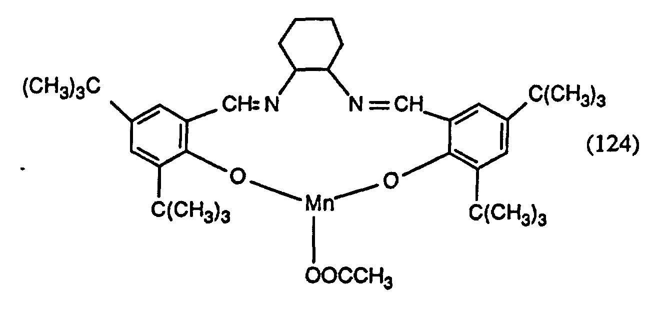

8.2 g. of 1,2-bis(3,5-di-tert.butylsalicylidamino)cyclohexane are added to 400 ml. of ethanol, the mixture is heated to 65°C. and 3.7 g. of manganese-II-acetate tetrahydrate are added to the yellow suspension. After a short time, a dark brown solution is formed which is stirred for 15 hours and then evaporated to dryness. 9.5 g. (92.8% theory) of a dark brown powder having the formula (124) are obtained.

| Elemental analysis of the compound having the formula (124) having the empirical formula C₃₈H₅₅MnN₂O₄.1.33 H₂O gives: | |
|---|---|
| Req.% | C 66.85; H 8.43; N 4.10; Mn 8.05. |
| Found % | C 66.98; H 8.53; N 4.00; Mn 7.82. |

### Example 19

A standard (ECE) washing powder is made up from the following components in the indicated proportions:

| | |
|---|---|
| 8.0% | Sodium (C₁₁₋₅)alkylbenzenesulphonate; |
| 2.9% | Tallow-alcohol-tetradecane-ethyleneglycolether |
| | (14 moles EO); |
| 3.5% | Sodium soap; |
| 43.8% | Sodium triphosphate; |
| 7.5% | Sodium silicate; |
| 1.9% | Magnesium silicate; |
| 1.2% | Carboxymethylcellulose; |
| 0.2% | EDTA; |
| 21.2% | Sodium sulphate; and |
| 9.8% | Water. |

An aqueous wash liquid is then made up and contains 7.5 g/l of the ECE powder, 1.13 g/l of sodium perborate monohydrate and 0.015 g/l of the compound of formula (111) as described in Example 8.

Into 400 ml of the aqueous wash liquid (made up using town water of 12 degrees of hardness), there are placed 12.5 g. of test cotton fabric soiled with red wine, tea, coffee or blackberry stains, as well 37.5 g. of bleached cotton (i.e. giving a liquor ratio of 1:8).

The respective wash baths are each heated from 15°C. to the test temperature of 25°C., 40°C. or 60°C. over a period of 10 minutes; and held at the respective test temperature for a further 10 minutes. The respective swatches are then rinsed under flowing, cold town water, spun dry and ironed.

The brightness value (Y) of the respective test swatches is then determined using an ICS SF 500 spectrophotometer. The value Y provides a measure of the level of bleach effect achieved. A difference of 1 Y unit is clearly detectable visually.

For reference purposes, the respective Y values are determined for each of the washed goods at 25°C. using perborate alone (i.e. using no compound of formula 109).

The results obtained are set out in the following Table.

**Table**

| Soil Type | ΔY | | | | | |
|---|---|---|---|---|---|---|
| | 15% perborate | | | 15% perborate + 0.2% cpd 110 | | |
| | 25°C. | 40°C. | 60°C. | 25°C. | 40°C. | 60°C. |
| red wine | Y= 64 | +1 | +3 | +4 | +6 | +14 |
| tea | Y= 65 | 0 | +5 | +4 | +10 | +22 |
| coffee | Y= 72 | +1 | +5 | +4 | +6 | +14 |
| blackberry | Y=60 | +2 | +7 | +7 | +10 | +23 |

It is clear from the results in the Table that, at any given temperature, the bleaching improvement achieved with a fabric bleaching composition according to the invention are 3 to 5 times greater than those achieved using perborate alone. Moreover, even at 25°C., a fabric bleaching composition according to the invention provides bleaching effects which are equivalent to those obtained at 60°C. using perborate alone.

Similar results are obtained when the compound of formula (111) is replaced by a compound of formula (110), (112), (114), (117), (118), (119), (120), (124).

## Claims

1. A bleaching and/or cleaning process comprising contacting a fabric to be bleached and/or cleaned with an effective amount of a fabric bleaching composition comprising
a) a peroxy compound; and
b) 0.0005 to 0.5%, by weight of manganese, of one or more water-soluble manganese complexes having one of the formulae (5), (6), (7) or (8): 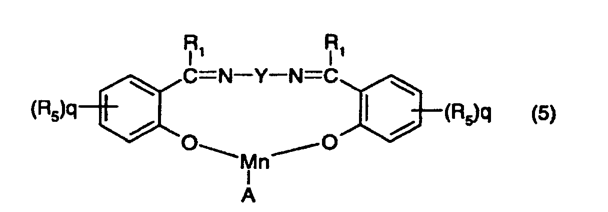 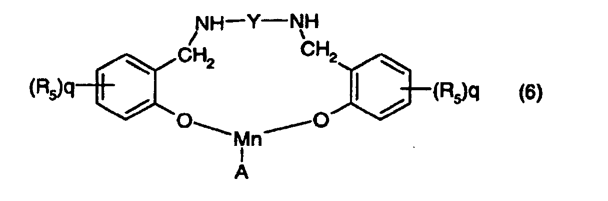 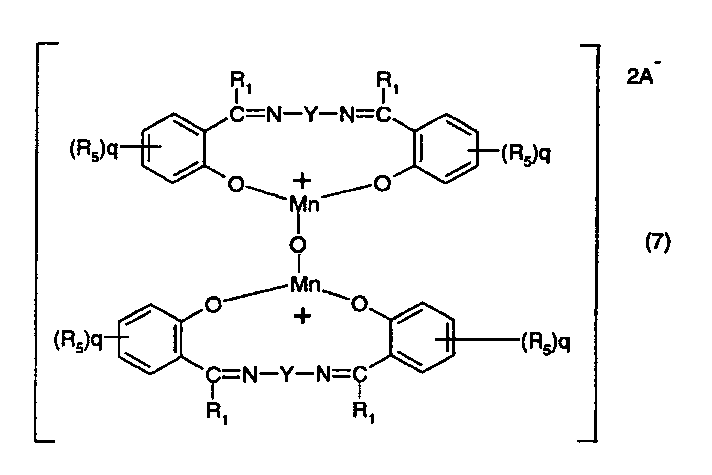 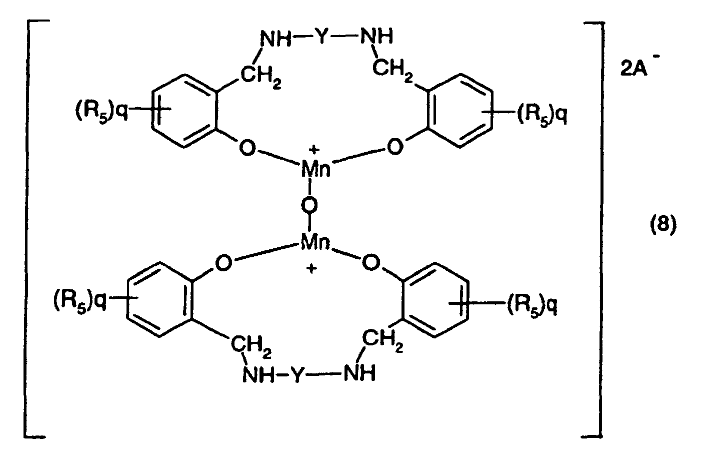
in which each R₁ is hydrogen or C₁₋₁₂alkyl, which is optionally substituted by halogen, by C₁₋₄alkoxy, by phenyl, by carboxyl, by C₁₋₄alkoxycarbonyl or by mono-or di C₁₋₄alkylated amino group;
cycloalkyl optionally substituted by C₁₋₄alkyl or C₁₋₄alkoxy;
or phenyl or naphthyl optionally substituted by C₁₋₄alkyl, by C₁₋₄alkyoxy, by C₂₋₅alkanoylamino, by nitro, by sulpho or by dialkylated amino;
R₅ is hydrogen;
C₁₋₁₂alkyl, which is optionally substituted by halogen, by C₁₋₄alkoxy, by phenyl, by carboxyl, by C₁₋₄alkoxycarbonyl or by mono-or di C₁₋₄alkylated amino group;
C₁₋₈alkoxy, which is optionally substituted by halogen, by C₁₋₄alkoxy, by phenyl, by carboxyl, by C₁₋₄alkoxycarbonyl or by mono-or di C₁₋₄alkylated amino group;
halogen;
N(C₁₋₄alkyl optionally substituted by halogen, by C₁₋₄alkoxy, by phenyl, by carboxyl, by C₁₋₄alkoxycarbonyl or by mono-or di C₁₋₄alkylated amino group)₂;
N⁺(C₁₋₄alkyl optionally substituted by halogen, by C₁₋₄alkoxy, by phenyl, by carboxyl, by C₁₋₄alkoxycarbonyl or by mono-or di C₁₋₄alkylated amino group)₃;
or a water solubilizing group;
Y is C₂₋₄alkylene;
C₂₋₈alkylene, which is interrupted by oxygen or by nitrogen or cyclohexylene,
q is 0, 1, 2 or 3; and A is an anion,
with the proviso that in the formula (5) R₅ is:
C₁₋₈alkoxy optionally substituted by halogen, by C₁₋₄alkoxy, by phenyl, by carboxyl, by C₁₋₄alkoxycarbonyl or by mono-or di C₁₋₄alkylated amino group;
cyano;
N(C₁₋₄alkyl optionally substituted by halogen, by C₁₋₄alkoxy, by phenyl, by carboxyl, by C₁₋₄alkoxycarbonyl or by mono-or di C₁₋₄alkylated amino group)₂;
N⁺(C₁₋₄alkyl optionally substituted by halogen, by C₁₋₄alkoxy, by phenyl, by carboxyl, by C₁₋₄alkoxycarbonyl or by mono-or di C₁₋₄alkylated amino group)₃; and R₁, q and A are as defined above.

2. A process according to claim 1 comprising
a) a peroxy compound; and
b) 0.005 to 0.05%, by weight of manganese, of one or more water-soluble manganese complexes having one of the formulae (5) - (8).

3. A process according to claim 1 or 2 in which a water solubilising group R₅ is SO₃M in which M is defined in claim 1.

4. A process according to any of claims 1 to 3 in which a complex of formula (5), (6), (7) or (8) is present in which R₁ is hydrogen or methyl, q is 1, R₅ is hydrogen, methyl or SO₃Na, Y is - CH₂CH₂- or cyclohexylene and A is a chloride, chlorate, acetate, hydroxy, methoxy or PF₆ anion.

5. A process according to claim 4 in which each SO₃Na group is in para position to the respective oxygen atom.

6. A process according to any of the preceding claims in which the peroxy component a) is hydrogen peroxide, a compound which liberates hydrogen peroxide, a peroxyacid, a peroxyacid bleach precursor or a mixture thereof.

7. A process according to claim 6 in which the compound which liberates hydrogen peroxide is an alkali metal peroxide, -perborate, -percarbonate, -perphosphate or -persulfate; peroxylauric acid, peroxybenzoic acid, diperoxyisophthalic acid, 1,12-diperoxydodecanedioic acid or urea peroxide; or a mixture thereof.

8. A process according to claim 7 in which the compound which liberates hydrogen peroxide is sodium percarbonate or sodium perborate.

9. A process according to claim 8 in which the
peroxyacid bleach precursor is
a benz(4H)-1,3-oxazin-4-one derivative
2-(N,N,N-trimethyl ammonium) ethyl sodium-4-sulfophenyl carbonate chloride (SPCC)
N-octyl,N,N-dimethyl-N10-carbophenoxy decyl ammonium chloride (ODC)
3-(N,N,N-trimethyl ammonium) propyl sodium 4-sulfophenyl carboxylate
N,N,N-trimethyl ammonium toluyloxy benzene sulfonate
sodium-4-benzoyloxy benzene sulfonate (SBOBS)
N,N,N',N'tetraacetyl ethylene diamine (TAED)
sodium-1-methyl-2-benzoyloxy benzene-4-sulfonate
sodium-4-methyl-3-benzoyloxy benzoate and
sodium nonanoyloxybenzene sulfonate (NOBS).

10. A process according to claim 9 in which the peroxyacid bleach precursor is a substituted 2-phenyl-benz(4H)-1,3-oxazin-4-one, sodium nonanoyloxybenzene sulfonate or N,N,N',N'-tetraacetyl ethylene diamine.

11. A process according to any of the preceding claims 6-in which the amount of the peroxy compound is 0.5 to 50% by weight, based on the total weight of the composition.

12. A process according to claim 11 in which the amount of the peroxy compound is 2 to 20% by weight, based on the total weight of the composition.

13. A process according to any of the preceding claims which also comprises a surfactant and a detergent builder.

14. A process according to claim 13 comprising 5-50% of an anionic surfactant and/or a nonionic surfactant.

15. A process according to claim 14 comprising 5-25% of an anionic surfactant and/or a nonionic surfactant.

16. A process according to claim 14 or 15 in which the anionic surfactant is a sulfate, sulfonate or carboxylate surfactant, or a mixture thereof.

17. A process according to claim 14 or 15 in which the nonionic surfactant is a condensate of ethylene oxide with a C₉-C₁₅ primary alcohol having 3-8 moles of ethylene oxide per mole.

18. A process according to claim 13 comprising 5-80% of a detergent builder.

19. A process according to claim 18 comprising 10-60% of a detergent builder.

20. A process according to claim 18 or 19 in which the detergent builder is an alkali metal phosphate; a carbonate or bicarbonate; a silicate; an aluminosilicate; a polycarboxylate; a polycarboxylic acid; an organic phosphonate; an aminoalkylene poly (alkylene phosphonate); or a mixture of these.

21. A process according to any of the preceding claims in which a protease, cellulase, lipase, oxidase or amylase enzyme is present.

22. A process according to any of the preceding claims wherein the fabric bleaching composition used is in powder or granulate form.

23. A process according to any of claims 1 to 21 wherein the fabric bleaching composition used is in liquid form and contains 0-5% water.

24. A process according to claim 23 wherein the fabric bleaching composition used is in liquid form and contains 0-1% water.

25. A process according to claims 1 - 24 in which the amount of the fabric bleaching composition used is such that the amount of manganese complex b) provides from 0.001 to 100 ppm of manganese in the bleaching and/or cleaning bath.

26. A process according to claim 25 in which the amount of the fabric bleaching composition used is such that the amount of manganese complex b) provides from 0.01 to 20 ppm of manganese in the bleaching and/or cleaning bath.

27. A compound having one of the formulae: 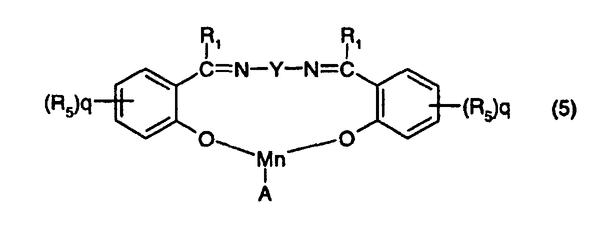 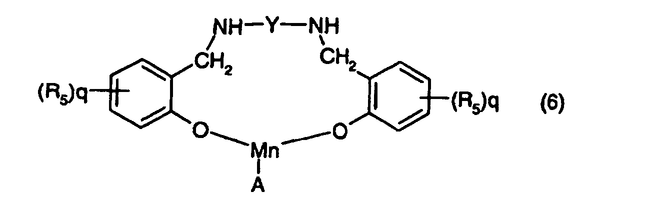 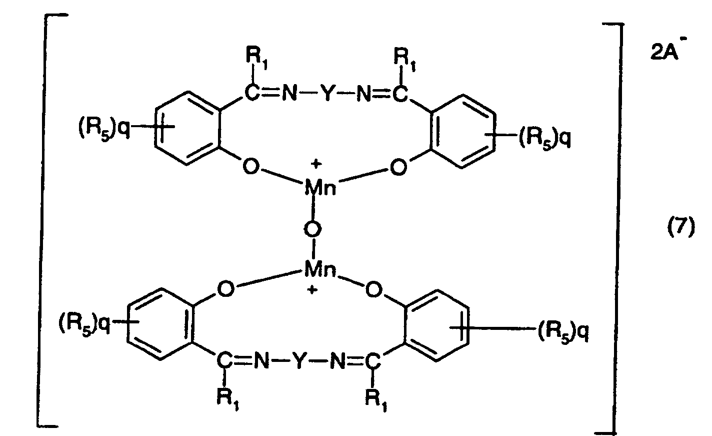 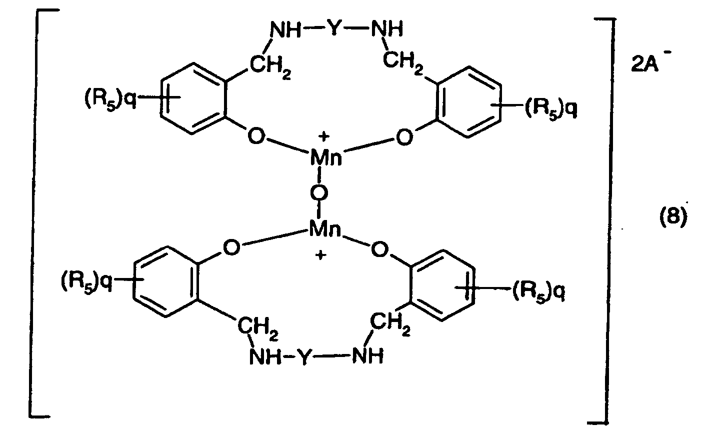 in which R₁, R₅, q and A are as defined in claim 1, provided that in the compounds of formula (5), q is 2 or 3.

## Patentansprüche

1. Bleich- und/oder Reinigungsverfahren, umfassend dass Inkontaktbringen einer zu bleichenden und/oder zu reinigenden Textilie mit einer wirksamen Menge einer textilbleichenden Zusammensetzung, umfassend
a) eine Peroxyverbindung; und
b) 0,0005 bis 0,5%, bezogen auf das Gewicht von Mangan, eines oder mehrerer wasserlöslicher Mangankomplexe mit einer der Formeln (5), (6), (7) oder (8): 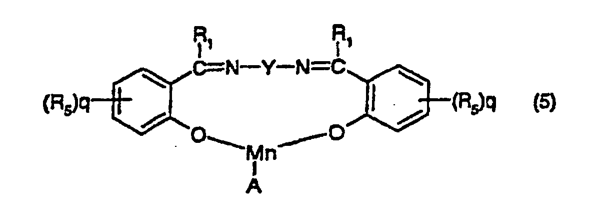 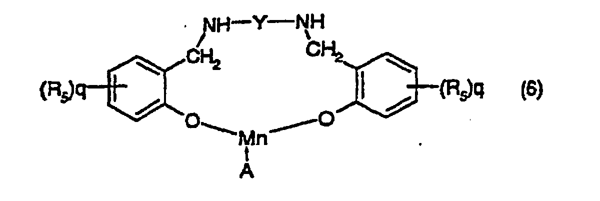 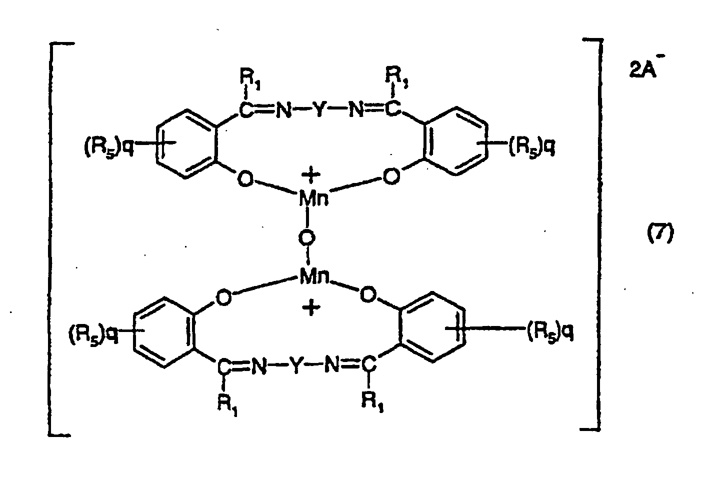 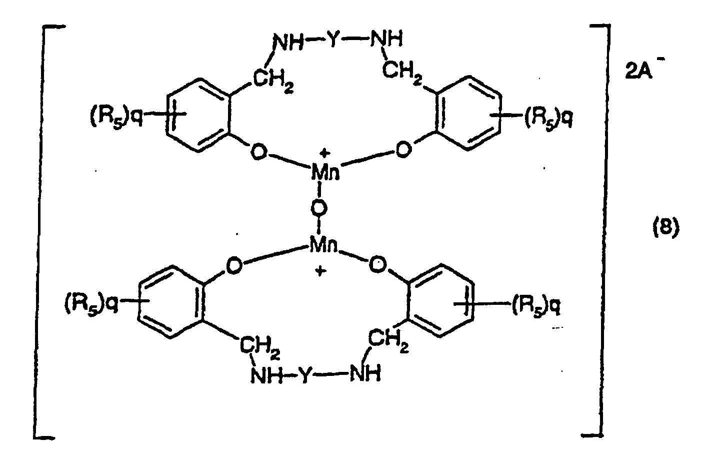
worin R₁ jeweils Wasserstoff oder C₁₋₁₂-Alkyl, welches wahlweise durch Halogen, durch C₁₋₄-Alkoxy, durch Phenyl, durch Carboxyl, durch C₁₋₄-Alkoxycarbonyl oder durch eine mono- oder di-C₁₋₄-alkylierte Aminogruppe substituiert ist;
Cycloalkyl, wahlweise substituiert durch C₁₋₄-Alkyl oder C₁₋₄-Alkoxy;
oder Phenyl oder Naphtyl, wahlweise substituiert durch C₁₋₄-Alkyl, durch C₁₋₄-Alkoxy, durch C₂₋₅-Alkanoylamino, durch Nitro, durch Sulfo oder durch dialkyliertes Amino darstellt;
R₅ Wasserstoff;
C₁₋₁₂-Alkyl welches wahlweise substituiert ist durch Halogen, durch C₁₋₄-Alkoxy, durch Phenyl, durch Carboxyl, durch C₁₋₄-Alkoxycarbonyl, oder durch eine mono- oder di-C₁₋₄-alkylierte Aminogruppe;
C₁₋₈-Alkoxy, welche wahlweise substituiert ist durch Halogen, durch C₁₋₄-Alkoxy, durch Phenyl, durch Carboxyl, durch C₁₋₄-Alkoxycarbonyl oder durch eine monooder di-C₁₋₄-alkylierte Aminogruppe;
Halogen;
N(C₁₋₄-Alkyl, wahlweise substituiert durch Halogen, durch C₁₋₄-Alkoxy, durch Phenyl, durch Carboxyl, durch C₁₋₄-Alkoxycarbonyl oder durch eine mono- oder di-C₁₋₄-alkylierte Aminogruppe)₂:
N⁺(C₁₋₄-Alkyl, wahlweise substituiert durch Halogen, durch C₁₋₄-Alkoxy, durch Phenyl, durch Carboxyl, durch C₁₋₄-Alkoxycarbonyl oder durch eine mono- oder di-C₁₋₄-alkylierte Aminogruppe)₃:
oder eine wassersolubilisierende Gruppe darstellt;
Y C₂₋₄-Alkylen;
C₂₋₈-Alkylen, welches unterbrochen ist durch Sauerstoff oder durch Stickstoff, oder Cyclohexylen darstellt;
q 0. 1. 2 oder 3 ist; und A ein Anion darstellt.
unter der Voraussetzung, dass in der Formel (5) R₅:
C₁₋₈-Alkoxy, wahlweise substituiert durch Halogen, durch C₁₋₄-Alkoxy, durch Phenyl, durch Carboxyl, durch C₁₋₄-Alkoxycarbonyl oder durch eine mono- oder di-C₁₋₄-alkylierte Aminogruppe substituiert ist;
Cyano;
N(C₁₋₄-Alkyl, wahlweise substituiert durch Halogen, durch C₁₋₄-Alkoxy, durch Phenyl, durch Carboxyl, durch C₁₋₄-Alkoxycarbonyl oder durch eine mono- oder di-C₁₋₄-alkylierte Aminogruppe)₂;
N⁺(C₁₋₄-Alkyl, wahlweise substituiert durch Halogen, durch C₁₋₄-Alkoxy, durch Phenyl, durch Carboxyl, durch C₁₋₄-Alkoxycarbonyl oder durch eine mono- oder di-C₁₋₄-alkylierte Aminogruppe)₃; darstellt und R₁, q und A wie oben definiert sind.

2. Verfahren nach Anspruch 1, umfassend
a) eine Peroxyverbindung; und
b) 0,005 bis 0,05%, bezogen auf das Gewicht von Mangan, eines oder mehrerer wasserlöslicher Mangankomplexe mit einer der Formeln (5)-(8).

3. Verfahren nach Anspruch 1 oder 2, worin eine wassersolubilisierende Gruppe R₅ SO₃M darstellt, worin M wie in Anspruch 1 definiert ist.

4. Verfahren nach mindestens einem der Ansprüche 1 bis 3, worin ein Komplex der Formel (5), (6), (7) oder (8) vorliegt, worin R₁ Wasserstoff oder Methyl ist, q 1 ist, R₅ Wasserstoff, Methyl oder SO₃Na darstellt, Y -CH₂CH₂- oder Cyclohexylen ist und A ein Chlorid-, Chlorat-, Acetat-, Hydroxy-, Methoxy- oder PF₆-Anion ist.

5. Verfahren nach Anspruch 4, worin sich eine jede SO₃Na-Gruppe in para-Position zu dem entsprechenden Sauerstoffatom befindet.

6. Verfahren nach mindestens einem der vorangehenden Ansprüche, worin die Peroxykomponente a) Wasserstoffperoxid, eine Verbindung, welche Wasserstoffperoxid freisetzt, eine Peroxysäure, eine Peroxysäurebleichvorstufe oder eine Mischung davon darstellt.

7. Verfahren nach Anspruch 6, worin die Verbindung, welche Wasserstoffperoxid freisetzt, ein Alkalimetallperoxid, -perborat, -percarbonat, -perphosphat oder -persulfat; Peroxylaurinsäure, Peroxybenzoesäure, Diperoxyisophthälsäure, 1,12-Diperoxydodecandisäure oder Harnstoffperoxid; oder eine Mischung davon ist.

8. Verfahren nach Anspruch 7, worin die Verbindung, welche Wasserstoffperoxid freisetzt, Natriumpercarbonat oder Natriumperborat darstellt.

9. Verfahren nach Anspruch 8, worin die Peroxysäurebleichvorstufe ein Benz(4H)-1.3-oxazin-4-on-Derivat.
2-(N,N,N-Trimethylammonium)ethyl-Natrium-4-sulfophenyl-carbonatchlorid (SPCC),
N-Octyl-N,N,dimethyl-N10-carbophenoxydecylammoniumchlorid (ODC),
3-(N,N,N-Trimethylammonium)propyl- Natrium-4-sulfophenylcarboxylat,
N,N,N-Trimethylammoniumtoluyloxybenzolsulfonat,
Natrium-4-benzoyloxybenzolsulfonat (SBOBS),
N,N,N',N'-Tetraacetylethylendiamin (TAED),
Natrium-1-methyl-2-benzoyloxybenzol-4-sulfonat,
Natrium-4-methyl-3-benzoyloxybenzoat und
Natriumnonanoyloxybenzolsulfonat (NOBS) darstellt.

10. Verfahren nach Anspruch 9, worin die Peroxysäurebleichvorstufe ein substituiertes 2-Phenyl-benz(4H)- 1,3-oxazin-4-on, Natriumnonanoyloxybenzolsulfonat oder N,N,N',N'-Tetraacetylethylendiamin darstellt.

11. Verfahren nach mindestens einem der vorangehenden Ansprüche, worin die Menge der Peroxyverbindung 0,5 bis 50 Gew.-%, auf der Basis des Gesamtgewichts der Zusammensetzung, beträgt.

12. Verfahren nach Anspruch 11, worin die Menge der Peroxyverbindung 2 bis 20 Gew.-%, auf der Basis des Gesamtgewichts der Zusammensetzung, beträgt.

13. Verfahren nach mindestens einem der vorangehenden Ansprüche, welches ebenso ein Tensid und einen Detergensbuilder umfasst.

14. Verfahren nach Anspruch 13, umfassend 5-50% eines anionischen Tensids und/oder eines nichtionischen Tensids.

15. Verfahren nach Anspruch 14, umfassend 5-25% eines anionischen Tensids und/oder eines nichtionischen Tensids.

16. Verfahren nach Anspruch 14 oder 15, worin das anionische Tensid ein Sulfat-, Sulfonat- oder Carboxylattensid, oder eine Mischung davon darstellt.

17. Verfahren nach Anspruch 14 oder 15, worin das nichtionische Tensid ein Kondensat von Ethylenoxid mit einem primären C₉₋₁₅-Alkohol mit 3 bis 8 Molen Ethylenoxid pro Mol darstellt.

18. Verfahren nach Anspruch 13, umfassend 5-80% eines Detergensbuilders.

19. Verfahren nach Anspruch 18, umfassend 10-60% eines Detergensbuilders.

20. Verfahren nach Anspruch 18 oder 19, worin der Detergensbuilder ein Alkalimetallphosphat; ein Carbonat oder Bicarbonat; ein Silicat; ein Aluminosilicat; ein Polycarboxylat; eine Polycarbonsäure; ein organisches Phosphonat; ein Aminoalkylenpoly(alkylenphosphonat); oder eine Mischung von diesen darstellt.

21. Verfahren nach mindestens einem der vorangehenden Ansprüche, worin ein Protease-. Cellulase-. Lipase-. Oxidase- oder Amylase-Enzym vorliegt.

22. Verfahren nach mindestens einem der vorangehenden Ansprüche, worin die verwendete textilbleichende Zusammensetzung in Pulver- oder Granulatform vorliegt.

23. Verfahren nach mindestens einem der Ansprüche 1 bis 21, worin die verwendete textilbleichende Zusammensetzung in flüssiger Form vorliegt und 0 bis 5% Wasser enthält.

24. Verfahren nach Anspruch 23, worin die verwendete textilbleichende Zusammensetzung in flüssiger Form vorliegt und 0 bis 1% Wasser enthält.

25. Verfahren nach Ansprüchen 1 bis 24, worin die Menge der verwendeten textilbleichenden Zusammensetzung derartig ist, dass die Menge an Mangankomplex b) 0,001 bis 100 ppm Mangan in dem Bleich- und/oder Reinigungsbad zur Verfügung stellt.

26. Verfahren nach Anspruch 25, worin die Menge der verwendeten textilbleichenden Zusammensetzung derartig ist, dass die Menge an Mangankomplex b) 0,01 bis 20 ppm Mangan in dem Bleich- und/oder Reinigungsbad zur Verfügung stellt.

27. Verbindung mit einer der Formeln: 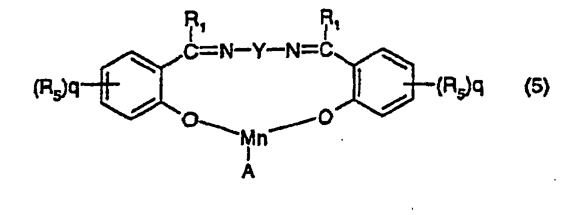 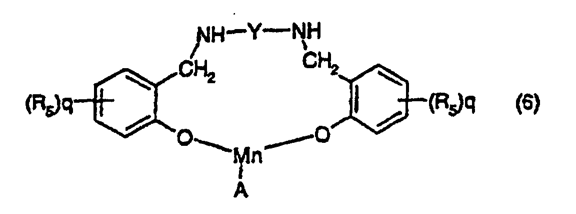 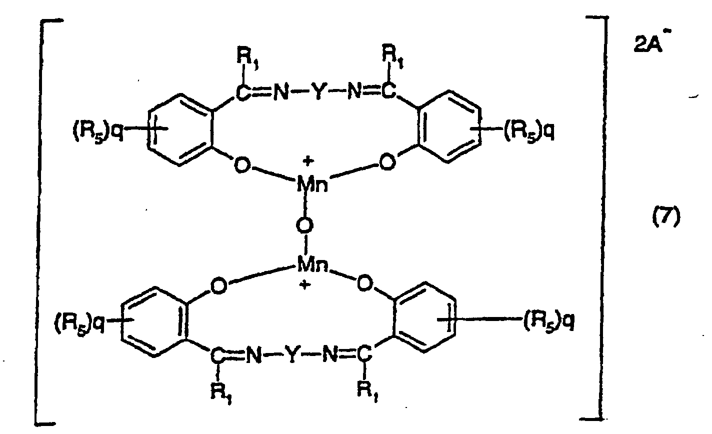 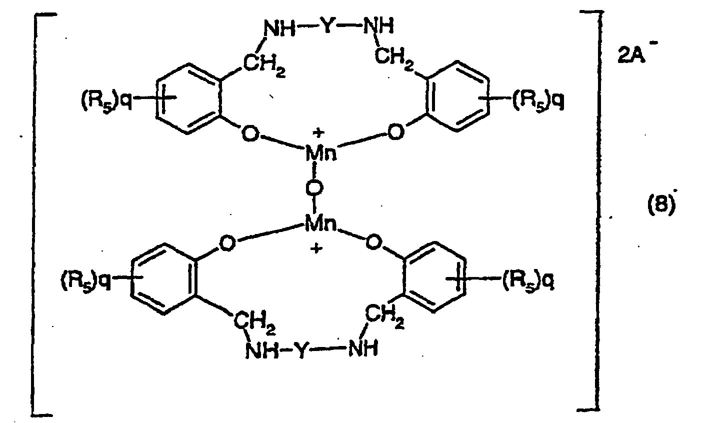 worin R₁, R₅, q und A wie in Anspruch 1 definiert sind, unter der Voraussetzung, dass in den Verbindungen der Formel (5) q 2 oder 3 ist.

## Revendications

1. Procédé de blanchissage et/ou de nettoyage comprenant la mise en contact d'un tissu à blanchir et/ou à nettoyer avec une proportion efficace d'une composition de blanchissage de tissus comprenant
a) un composé peroxy, et
b) 0,0005 à 0,5 % en poids de manganèse, de un ou plusieurs complexes de manganèse solubles dans l'eau présentant l'une des formules (5), (6), (7) ou (8) : 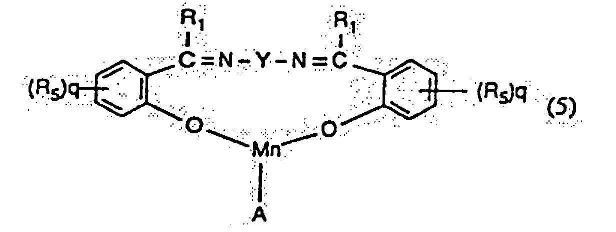 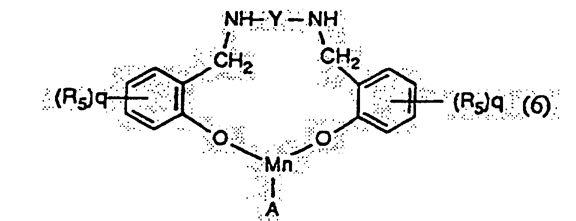 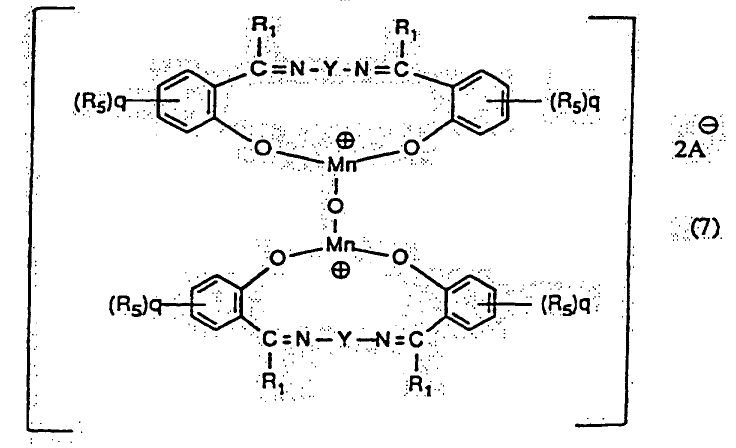 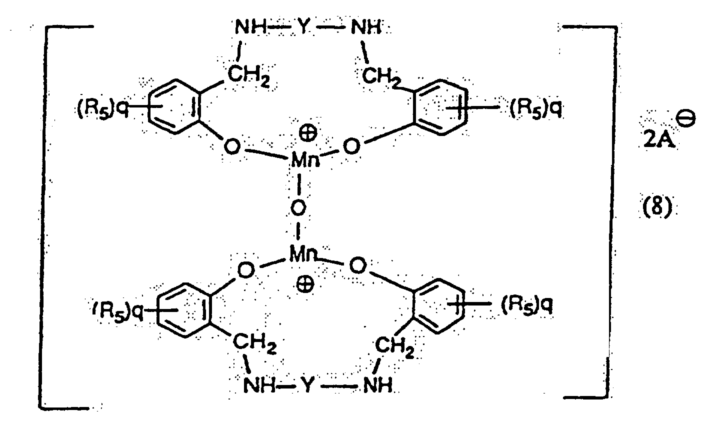
dans lesquelles chaque R₁ représente un atome d'hydrogène ou un alkyle en C₁ à C₁₂, qui est optionnellement substitué par un halogène, par un groupement alcoxy en C₁ à C₄, par un groupement phényle, par un groupement carboxyle, par un groupement alcoxycarbonyle en C₁ à C₄ ou bien par un groupement amino mono ou dialkylé en C₁ à C₄,
un cycloalkyle optionnellement substitué par un alkyle en C₁ à C₄ ou un alcoxy en C₁ à C₄,
ou bien un groupement phényle ou naphtyle optionnellement substitué par un groupement alkyle en C₁ à C₄, par un groupement alcoxy en C₁ à C₄, par un groupement alcanoyle en C₂ à C₅ amino, par un groupement nitro, par un groupement sulfo ou par un groupement aminodialkylé,
R₅ représente un atome d'hydrogène,
un groupement alkyle en C₁ à C₁₂, qui est optionnellement substitué par un halogène, par un groupement alcoxy en C₁ à C₄, par un groupement phényle, par un groupement carboxyle, par un groupement alcoxycarbonyle en Ci à C₄ ou par un groupement amino mono ou dialkylé en C₁ à C₄,
un groupement alcoxy en C₁ à C₈, qui est optionnellement substitué par un halogène, par un groupement alcoxy en C₁ à C₄, par un groupement phényle, par un groupement carboxyle, par un groupement alcoxycarbonyle en C₁ à C₄ ou par un groupe amino mono ou dialkylé en C₁ à C₄,
un halogène,
un N(alkyle en C₁ à C₄ optionnellement substitué par un halogène, par un groupement alcoxy en C₁ à C₄, par un groupement phényle, par un groupement carboxyle, par un groupement alcoxycarbonyle en C₁ à C₄ ou par un groupement amino mono ou dialkylé en C₁ à C₄)₂,
un N⁺(alkyle en C₁ à C₄ optionnellement substitué par un halogène, par un groupement alcoxy en C₁ à C₄, par un groupement phényle, par un groupement carboxyle, par un groupement alcoxycarbonyle en C₁ à C₄ ou par un groupement amino mono ou dialkylé en C₁ à C₄) ₃,
ou bien un groupement de solubilisation dans l'eau,
Y représente un alkylène en C₂ à C₄,
un alkylène en C₂ à C₈, qui est interrompu par de l'oxygène ou par de l'azote ou par du cyclohexylène,
q vaut 0, 1, 2 ou 3, et A représente un anion, à condition que dans la formule (5 ) R₅ soit :
un groupement alcoxy en C₁ à C₈ optionnellement substitué par un halogène, par un groupement alcoxy en C₁ à C₄, par un groupement phényle, par un groupement carboxyle, par un groupement alcoxycarbonyle en C₁ à C₄ ou par un groupement amino mono ou dialkylé en C₁ à C₄,
un groupement cyano,
un N(alkyle en C₁ à C₄ optionnellement substitué par un halogène, par un groupement alcoxy en C₁ à C₄, par un groupement phényle, par un groupement carboxyle, par un groupement alcoxycarbonyle en C₁ à C₄ ou par un groupement amino mono ou dialkylé en C₁ à C₄)₂,
un N⁺(alkyle en C₁ à C₄ optionnellement substitué par un halogène, par un groupement alcoxy en C₁ à C₄, par un groupement phényle, par un groupement carboxyle, par un groupement alcoxycarbonyle en C₁ à C₄ ou par un groupement amino mono ou dialkylé en C₁ à C₄) ₃, et R₁, q et A sont tels que définis ci-dessus.

2. Procédé selon la revendication 1 comprenant
a) un composé peroxy, et
b) 0,005 à 0,05 % en poids de manganèse, de un ou plusieurs complexes de manganèse solubles dans l'eau ayant l'une des formules (5) à (8).

3. Procédé selon la revendication 1 ou 2, dans lequel un groupement de solubilisation dans l'eau R₅ est SO₃M dans lequel M est défini dans la revendication 1.

4. Procédé selon l'une quelconque des revendications 1 à 3, dans lequel un complexe selon la formule (5), (6), (7) ou (8) est présent, dans lequel R₁ est un atome d'hydrogène ou un groupement méthyle, q vaut 1, R₅ est un atome d'hydrogène, un groupement méthyle ou SO₃Na, Y représente -CH₂CH₂- ou du cyclohexylène et A est un anion chlorure, chlorate, acétate, hydroxy, méthoxy ou PF₆.

5. Procédé selon la revendication 4, dans lequel chaque groupement SO₃Na est à la position para par rapport à l'atome d'oxygène respectif.

6. Procédé selon l'une quelconque des revendications précédentes, dans lequel le composant peroxy a) est du peroxyde d'hydrogène, un composé qui libère du peroxyde d'hydrogène, un peroxy acide, un précurseur de blanchissage de peroxy acide ou un mélange de ceux-ci.

7. Procédé selon la revendication 6, dans lequel le composé qui libère du peroxyde d'hydrogène est un peroxyde, un perborate, un percarbonate, un perphosphate ou un persulfate de métal alcalin, de l'acide peroxylaurique, de l'acide peroxybenzoïque, un acide diperoxyisophtalique, de l'acide 1,12-dipéroxydodécanedioïque ou du peroxyde d'urée, ou un mélange de ceux-ci.

8. Procédé selon la revendication 7, dans lequel le composé qui libère du peroxyde d'hydrogène est du percarbonate de sodium ou du perborate de sodium.

9. Procédé selon la revendication 8, dans lequel le précurseur de blanchissage de peroxyacide est
un dérivé de la benz(4H)-1,3-oxazine-4-one
un chlorure de 2-(N,N,N-triméthylammonium)éthylsodium-4-sulfophénylcarbonate (SPCC)
un chlorure de N-octyl,N,N-diméthyl-N10-carboxyphénoxydécylammonium (ODC)
un carboxylate de 3-(N,N,N-triméthylammonium)propylsodium 4-sulfophényle
un sulfonate de N,N,N-triméthylammonium toluyloxybenzène
un sulfonate de sodium-4-benzoyloxybenzène (SBOBS)
de la N,N,N',N'tétraacétyléthylènediamine (TAED)
du sodium-1-méthyl-2-benzoyloxybenzène-4-sulfonate
du sodium-4-méthyl-3-benzoyloxybenzoate et
du sodium nonanoyloxybenzène sulfonate (NOBS).

10. Procédé selon la revendication 9, dans lequel le précurseur de blanchissage de peroxyacide est une 2-phényl-benz(4H)-1,3-oxazine-4-one substituée, du sodium nonanoyloxybenzène sulfonate ou de la N,N,N', N'-tétraacétyléthylènediamine.

11. Procédé selon l'une quelconque des revendications précédentes dans lequel la proportion du composé peroxy est de 0,5 à 50 % en poids, sur la base du poids total de la composition.

12. Procédé selon la revendication 11, dans lequel la proportion du composé peroxy est de 2 à 20 % en poids, sur la base du poids total de la composition.

13. Procédé selon l'une quelconque des revendications précédentes, qui comprend également un tensioactif et un adjuvant de détergent.

14. Procédé selon la revendication 13, comprenant 5 à 50 % d'un tensioactif anionique et/ou d'un tensioactif non ionique.

15. Procédé selon la revendication 14, comprenant 5 à 25 % d'un tensioactif anionique et/ou d'un tensioactif non ionique.

16. Procédé selon la revendication 14 ou 15, dans lequel le tensioactif anionique est un tensioactif de type sulfate, sulfonate ou carboxylate, ou un mélange de ceux-ci.

17. Procédé selon la revendication 14 ou 15, dans lequel le tensioactif non ionique est un condensat d'oxyde d'éthylène avec un alcool primaire en C₉ à C₁₅ comportant 3 à 8 moles d'oxyde d'éthylène par mole.

18. Procédé selon la revendication 13, comprenant 5 à 80 % d'un adjuvant de détergent.

19. Procédé selon la revendication 18, comprenant 10 à 60 % d'un adjuvant de détergent.

20. Procédé selon la revendication 18 ou 19, dans lequel l'adjuvant de détergent est un phosphate d'un métal alcalin, un carbonate ou un bicarbonate, un silicate, un aluminosilicate, un polycarboxylate, un acide polycarboxylique, un phosphonate organique, un aminoalkylène poly(phosphonate d'alkylène), ou un mélange de ceux-ci.

21. Procédé selon l'une quelconque des revendications précédentes, dans lequel une enzyme de protéase, de cellulase, de lipase, d'oxydase ou d'amylase est présente.

22. Procédé selon l'une quelconque des revendications précédentes, dans lequel la composition de blanchissage de tissus utilisée est sous forme de poudre ou de granulés.

23. Procédé selon l'une quelconque des revendications 1 à 21, dans lequel la composition de blanchissage de tissus utilisée est sous forme liquide et contient de 0 à 5 % d'eau.

24. Procédé selon la revendication 23, dans lequel la composition de blanchissage de tissus utilisée est sous forme liquide et contient de 0 à 1 % d'eau.

25. Procédé selon les revendications 1 à 24, dans lequel la proportion de la composition de blanchissage de tissus utilisée est telle que la proportion du complexe de manganèse b) fournit de 0,001 à 100 ppm de manganèse dans le bain de blanchissage et/ou de nettoyage.

26. Procédé selon la revendication 25, dans lequel la proportion de la composition de blanchissage de tissus utilisée est telle que la proportion du complexe de manganèse b) procure de 0,01 à 20 ppm de manganèse dans le bain de blanchissage et/ou de nettoyage.

27. Composé selon l'une des formules : 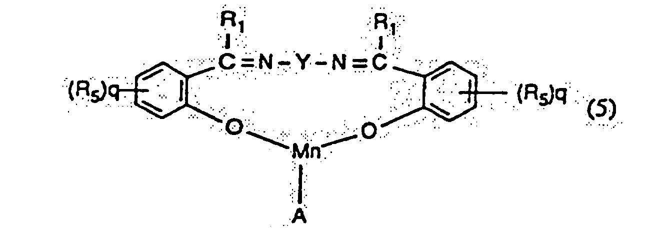 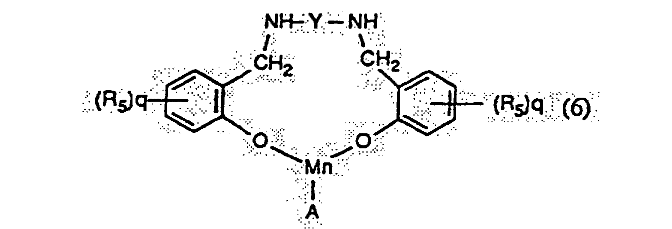 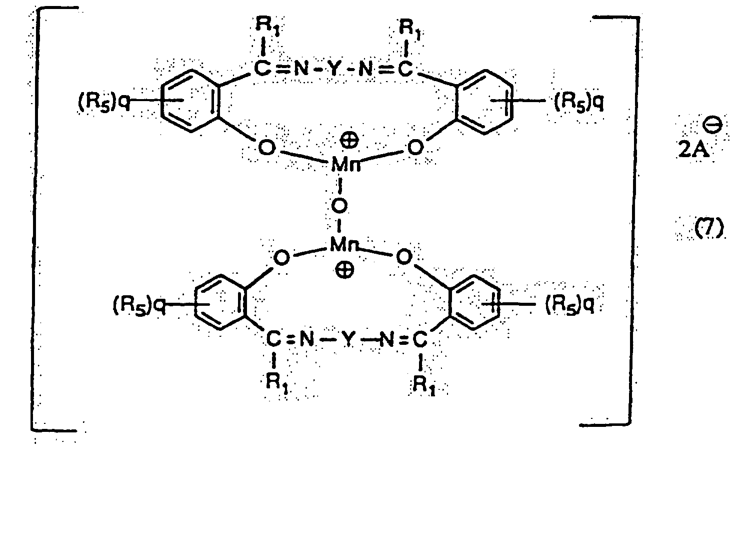 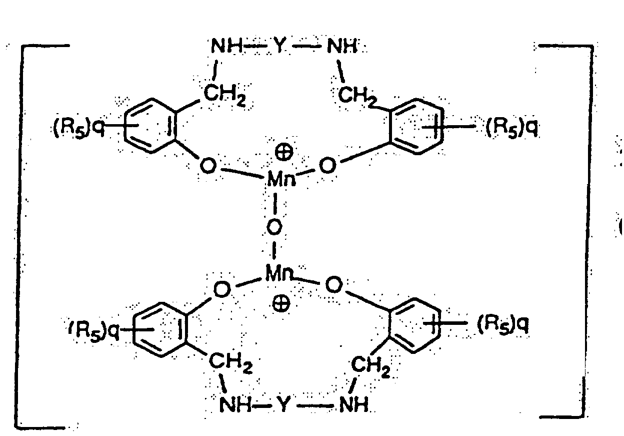 dans lesquelles R₁, R₅, q et A sont tels que définis dans la revendication 1, à condition que dans les composés selon la formule (5), q soit 2 ou 3.
